# EUROPEAN PATENT APPLICATION

(11) **EP 1 366 888 A1**
(43) Date of publication of application: **03.12.2003**
(21) Application number: 02711324.0
(22) Date of filing: 06.02.2002
(51) Int. Cl.: B29C 59/02, G09F 13/06, G02B 5/124

(54) **METHOD OF MANUFACTURING MICRO EMBOSS SHEET AND MICRO EMBOSS SHEET**

(30) Priority: 07.02.2001 JP 2001031291; 09.04.2001 JP 2001109997
(71) Applicant: Idemitsu Unitech Co., Ltd., Tokyo 112-0002 (JP)
(72) Inventor: FUJII, Atsushi, Sodegaura-shi, Chiba 299-0205 (JP); YUKUMOTO, Tohru, Sodegaura-shi, Chiba 299-0205 (JP); TAKUBO, Toyokazu, Sodegaura-shi, Chiba 299-0205 (JP); TANAKA, Kazuyoshi, Sodegaura-shi, Chiba 299-0205 (JP); MATSUZAWA, Kouzaburou, Kawaguchi-shi, Saitama 332-0061 (JP)
(74) Representative: Hucker, Charlotte Jane
(86) International application number: JP0200953
(87) International publication number: WO02064350

(57) **Abstract**

A method of manufacturing a micro embossed sheet having a fine emboss pattern, in which a sheet, to which an emboss pattern is overlaid on a sheet0fed embossing plate with a emboss pattern formed thereon, said embossing plate and said sheet are held and pressed by a pair of rolls provided in the top and rear surface sides of said embossing plate to transcribed the emboss pattern onto said sheet, and said sheet is separated from the embossing plate after the transcription.

## Description

### Technical Field

The present invention relates to a method of manufacturing a micro embossed sheet and a micro embossed sheet.

### Background Art

A thermoplastic resin sheet with a micro emboss pattern formed on one surface thereof is useful as a lens function sheet such as a Fresnel lens sheet, a lenticular lens sheet, a prism lens sheet. For instance, a retroreflective sheet with micro prisms formed one surface thereof (plastic reflection sheet) has been used in the fields of, for instance, reflective materials, fashion, and construction.

As the retroreflective sheets as described above, there are glass bead type ones and cube corner type ones. Generally the cube corner type of retroreflective sheets are more excellent in terms of long distance visibility and reflex brightness. In the process of manufacturing the cube corner type of retroreflective sheet as described above, it is required to transcribe a emboss pattern of a die for forming an emboss pattern onto a thermoplastic resin sheet.

To achieve this objective, it is important that the thermoplastic resin sheet is pressed to a die for forming an emboss pattern at an appropriate temperature as well as under an appropriate pressure.

As a method of forming a emboss pattern on a thermoplastic resin sheet, the method of heating and pressing a thermoplastic resin sheet by a flat pressing machine equipped with a mechanism for heating and cooling a thermoplastic resin, cooling and curing the thermoplastic sheet as it is, and then separating the cured thermoplastic resin sheet as disclosed in Japanese Patent Publication No. SHO 55-21321 is well known.

Other methods available for this purpose include the method of forming a emboss pattern on an emboss plat belt and transcribing the emboss pattern onto a sheet to be embossed as disclosed in Japanese Patent Laid-Open Publication No. SHO 51-135962, and the method of transcribing the emboss pattern onto a sheet to be embossed using a cylindrical roll with an emboss pattern formed thereon as an embossing plate for transcribing the emboss pattern.

With the method using the flat pressing machine as described above, however, there is the problem that embossing can not be performed continuously, and further as pressing is carried out with the flat pressing machine, it is difficult to remove air between the embossing plate and an embossed sheet, and the residual air makes it difficult to transcribe a fine emboss pattern.

With the method using a belt as described above, it is possible to transcribe an emboss pattern in succession because a belt is used as an embossing plate, but it is difficult to form a fine emboss pattern on the belt, and further durability of the belt is disadvantageously low.

Further with the method using a roll, although transcription of a fine emboss pattern can continuously be performed, as the emboss pattern is formed on a metal plate and then the metal plate is processed into a cylindrical form, the device cost is rather high, and when the metal plate for the roll is damaged, the cost for replacing the metal plate with a new one is disadvantageously high.

It is an object of the present invention to provide a method of producing a micro embossed sheet enabling to accurately transcribe a fine emboss pattern and also to continuously transcribe the emboss pattern with low device cost and also to provide a micro embossed sheet produced by the method.

### Disclosure of the Invention

The present invention provides a method of producing a micro embossed sheet which is a sheet having a fine emboss pattern formed thereon, and this method comprises a transcribing step of transcribing an emboss pattern, by overlaying a sheet, to which an emboss pattern is to be transcribed, over a surface of a sheet-fed embossing plate with an emboss pattern formed thereon and holding the embossing plate and the sheet, to which the emboss pattern is to be transcribed, with a pair of rolls provided on top and rear surface of the embossing plate, onto the sheet to which the emboss pattern is to be transcribed; and a separating step of separating the sheet, to which the embossed sheet is to be transcribed, from the embossing plate.

With the present invention as described above, as a sheet-fed embossing plate and a sheet, to which an emboss pattern is to be transcribed, are inserted between rolls and an emboss pattern is transcribed on the sheet in the state where the embossing plate and the sheet are held between the rolls, emboss patterns can be transcribed in succession by successively feeding emboss plates.

Different from the method in which emboss patterns are transcribed with rolls each having an emboss pattern with the same width and same area formed thereon, by using a plurality of embossing plates for transcribing emboss patterns, it is possible to reduce the risk when an embossing plate is damaged, and as a result the device cost can be reduced.

Further transcription of an emboss pattern is performed in the state where the embossing plate and the sheet, to which the emboss pattern is to be transcribed, are held by rolls, and therefore an air pool with a relatively large volume between an embossing surface of the embossing plate and the sheet to which the emboss pattern is to be transcribed is eliminated, which advantageously makes it possible to transcribe a fine emboss pattern onto the sheet.

In the present invention, the specific means as described hereinafter may be employed for each of the components in this invention.

The term of "emboss pattern" as used herein indicates a pattern formed by means of compression in the pressing step. The term of "micro emboss" as uses herein indicates one having the structure in which a difference between the irregularities in height on the surface is in the range from several tens µm to several hundreds µm with the surface roughness Ra (as defined in JIS B 0601) of 2 µm or below. The Ra should preferably be not more than 0.1 µm in optical applications. In the case of the retroreflective cube comer prism, it has a number of triangular pyramids each consisting of three right-angled triangles and one acute-angled triangle, namely each consisting of right-angled triangles with an inter-surface angle of 90 ° and a bottom surface having a form of an acute-angled triangle. The height of each pyramid from the bottom surface is in the range from several tens µm to several hundreds µm. For instance, in the case of a pyramid structure with a bottom surface having a form of regular triangle with one edge of 200 µm.

The term of "embossing plate" as used herein indicates a template with an emboss pattern formed thereon. Requirements to materials for the embossing plate include high heat conductivity, sufficient hardness, sufficient heat resistance, high durability, adaptability to be processed, high cost performance, and the possibility to transcribe a fine emboss pattern. Among those satisfying the above-described requirements, metal is preferable as a material for the embossing plate, and electrotyped nickel is especially preferable.

The thickness of the embossing plate is preferably in the range from 0.1 to 4 mm, and more preferably in the range from 0.3 to 0.8 mm. When the thickness of the embossing plate is less than 4 mm, the heat conductivity becomes lower with the energy loss during heating and cooling generated, which may result in lower productivity.

The size of an embossing plate varies according to applications. For instance, when embossing plates are fed successively, it is preferable that such a trouble as a clearance should not occur between embossing plates. The embossing plate has generally a rectangular plate form. The length of an embossing plate in the feed direction is preferably in the range from 3 to 100 cm in view of the appearance required for the final product, size, and cost of the embossing plate. More preferably, the length of the embossing plate in the feed direction is in the range from 10 to 40 cm.

It is preferable to use a pair of rolls each having pressing and heating functions for transcribing an emboss pattern onto a sheet to which the emboss pattern is to be transcribed.

The material and internal structure of the rolls preferably have the rigidity sufficient to endure the pressure when pressed. The material should be selected taking into considerations the cost performance of the rolls. A diameter of each roll should be decided so that a bending stress in the embossing plate is small when held by the rolls. When a space between the pressing zones is sufficiently large, the transcribing speed can be raised, so that the roll diameter should sufficiently be large. When the roll diameter is too large, however, the size of the device becomes large and the cost increases, so that the roll diameter should be decided taking into considerations the cost performance.

Elastic materials having high heat resistance such as, for instance, silicon rubber or Teflon (Registered trademark) rubber should preferably be used to provide satisfying surface and structure of the pair of rolls. The rubber hardness as measured by the method based on the JIS K6301 A Model is preferably in the range from 50 to 98 degrees, and more preferably in the range from 70 to 98 degrees. In stead of using an elastic material for a surface of the roll, an elastic body may be inserted between a sheet to which an emboss pattern is to be transcribed and the roll without changing rigidity of the roll as a whole. The surface structure of the roll when pressed is required to maintain the flatness at the level where the surface state of the sheet after transcription is not deteriorated. With the elasticity, the holding pressure onto the sheet to which the emboss pattern is to be transcribed and the embossing plate between the two rolls can be maintained over a prespecified length.

Any thermoplastic material may be used as a material for the sheet to be embossed. It is not always necessary to use synthetic resin as the material. The structure may be of monolayer or comprise a plurality of layers so long as the thermoplastic material has the sufficient thickness. Further when used for an optical application such as a retroreflective sheet, the material should have the sufficient transparency, refractive index, and double reflex.

Thermoplastic resins as the materials satisfying the requirements as described above include, for instance, PE (polyethylene), PP (polypropylene), PC (polycarbonate), PVC (polyvinyl chloride), PMMA (methyl polymethacrylate), EMMA (Ethylene-methacrylate copolymer).

The thickness of the sheet to be embossed should be decided according to the application (a type of the resin, and required rigidity of the final product) as well as to a form of the emboss pattern to be transcribed. More specifically, the thickness should preferably be in the range from 0.02 to 50 mm. When the thickness is smaller than 0.02 mm, the sheet with the emboss pattern transcribed thereto may be disrupted when it is separated from the embossing plate. When the thickness is larger than 50 mm, energy loss may occur during the steps of heating and cooling the sheet to which the emboss pattern was transcribed, and in addition, a stress load to the embossing plate increases when the sheet, to which the emboss plate is transcribed, is separated from the embossing plate, and the risk of damaging the embossing plate may disadvantageously increase. Further in a case of an optical application, as the completed embossed sheet must have the sufficient transparency, refractive index, and double reflex, more strict conditions are required. More specifically, when the height of a emboss on the emboss pattern is 70 µm, the thickness of the sheet to which the emboss pattern is transcribed should preferably be in the range from 0.10 to 0.60 mm, and more preferably in the range from 0.15 to 0.30 mm.

A separating roll may be provided to separate a sheet to be embossed from an embossing plate in the separating step. The separating roll. may made from a metallic material or an elastic material. As the elastic material, for instance silicon rubber or Teflon (registered trademark) rubber is preferable. Further a metal roll coated with the silicon rubber may be employed. The separating roll may also function as a cooling roll, and a cooling roll may be provided together with the separating roll. By cooling, the separation can be performed more smoothly.

The sheet used in the present invention includes one with the relatively small thickness.

### (Transcription)

In the present invention, the transcribing step should preferably be carried out in the state where an embossing plate and a sheet to be embossed are held between rolls in the substantially flat state.

With this feature, as the embossing plate and the sheet to be embossed are held between the rolls in the substantially flat state, the emboss pattern can accurately be transcribed.

In the present invention, the embossing plate is preferably metallic.

When the embossing plate is a metallic one, the heat conductivity is high and a high precision emboss pattern can be processed, so that the embossing plate can easily transfer heat for heating, and further an embossing plate having a high precision emboss pattern can easily be manufactured.

In the present invention, the embossing plate should preferably have a concave cube corner type of emboss pattern.

Because of this feature, the completed micro embossed sheet has a cube corner type of emboss patter, so that a micro embossed sheet with excellent retroreflectivity can be manufactured.

In the present invention, the sheet to be embossed is preferably made from a thermoplastic resin.

Because of this feature, as the sheet to be embossed is made from a thermoplastic resin, an emboss pattern can easily be manufactured by heating and pressing during transcription of the emboss pattern.

In the present invention, the sheet to be embossed is preferably a continuous and lengthy one.

Because of this feature, the completed micro embossed sheet is a continuous and lengthy one, so that a method of winding the micro embossed sheet around a roll or the like can be employed for storage, and such works as storage and transfer can easily be carried out.

In the present invention, pressing should preferably be performed in the transcribing step in the state where an embossed sheet is transcribed is overlaid on an embossing plate so that a surface of the former contacts a mirror-finished surface of a mirror-finished member.

As the characteristics required for the mirror-finished member, the rigidity sufficient to prevent melting and deformation in the heating step is necessary. In addition, the flatness sufficient to provide luster is required as characteristics of the surface. As the mirror-finished member, for instance, a thermoplastic resin film and a metal foil such as aluminum not fused to the sheet to be embossed may be used. In addition, such metal plates as copper, nickel, and stainless steel with the surface mirror-finished may be used.

With this configuration, the mirror-like luster or other properties can be given to a surface of the sheet to be embossed opposite to the embossed surface thereof.

In the present invention, it is preferable to overlay a mirror-finished film or sheet having a mirror-finished surface over a sheet to be embossed.

As the characteristics required to the mirror-finished sheet, like in the case of the mirror-finished member, the heat resistance sufficient for preventing fusing and deformation in the heating step is necessary. In addition, the flatness sufficient to give luster is required as the surface characteristics. For instance, a resin film or sheet made from such a material as PET (polyethylene telephtalate), or polyimide may be employed.

Because of this feature, luster like that on a mirror surface can be given to a surface of a sheet to be embossed opposite to the embossed surface thereof.

### (Holding Pressure)

In the present invention, at least one of the two rolls forming a pair should preferably have a surface made from an elastic body.

Because of this feature, a surface of at least one of the two rolls forming a pair is made from an elastic body, so that a wide pressing surface can be acquired on a surface of the roll, which insures the improved adaptability to transcription.

In the present invention, holding and pressing should preferably be carried out in the transcribing step in the state where an elastic member is inserted between the sheet to be embossed and the roll.

Because of this feature, the elastic member has the elasticity, so that a sufficient pressure can be delivered to the sheet to which an emboss plate is transcribed.

In the present invention, the linear pressure for holding an embossing plate and a sheet to be embossed is preferably not less than 50 N/cm.

Because of the feature, as the linear pressure is not less than 50 N/cm and the embossing plate and the sheet can sufficiently be held and pressed, an emboss pattern can accurately be transcribed.

### (Heating)

In the present invention, the sheet to be embossed is preferably heated to a temperature higher than the melting point in the transcribing step when the embossing plate and the sheet are held and pressed.

Because of this feature, when an embossing plate and a sheet to which an emboss pattern are held and pressed, the sheet is heated to a temperature higher than the melting point and the sheet can sufficiently be softened before transcription, so that the emboss pattern can efficiently be transcribed onto the sheet.

In the present invention, of the pair of rolls used in the transcribing step, at least one of the rolls is a heating roll.

A heating roll having a heater or the IH structure provided therein may be employed. Further a heating roll, in which heated oil or the like is flown, may be employed.

Because of this feature, heating and pressing to the sheet to be embossed and to the embossing plate can be performed simultaneously, so that the emboss pattern can accurately be transcribed onto the sheet to be embossed.

In the present invention, the heating roll should preferably be provided in the side of the embossing plate.

Because of this feature, the embossing plate is provided in the side of the heating roll, so that the embossing plate can efficiently be heated, and therefore the sheet to be embossed can easily be softened for transcribing an emboss pattern thereon.

In the present invention, the heating roll preferably contacts a rear surface of the embossing plate.

With the configuration, as the heating roll contacts a rear surface of the embossing plate, the embossing plate can efficiently be heated, so that the sheet to be embossed can easily be softened via the embossing plate for transcribing an emboss pattern thereon.

In the present invention, the plate heating step of previously heating an embossing plate is preferably performed before the transcribing step is performed.

As a heating unit for previously heating an embossing plate in the plate heating step, in addition to the heating roll, also a unit for heating the embossing plate from outside the roll with heated air or flame such as a radiant electric heater may be employed.

In this case, as the plate heating step is provided and also the embossing plate is previously heated, a sheet to be embossed can be heated from both side thereof, namely by the embossing plate and the heating roll for softening the sheet to be embossed before transcription, so that an embossing pattern can efficiently be performed.

In the present invention, a sheet heating step of previously heating a sheet to be embossed may be provided before the transcribing step.

As the heating unit for previously heating a sheet to be embossed in this sheet heating step, like in the case of the plate heating step, a radiant electric heater or other unit for heating from outside of the roll with heated air or flames may be employed in addition to the heating roll.

With this configuration, as the sheet to be embossed can be softened in the sheet heating step before transcription, an embossing pattern can more efficiently be transcribed onto the sheet to be embossed.

### (Cooling)

In the present invention, a cooling step for cooling and solidifying the sheet to be embossed in the state where the embossing plate and the sheet to be embossed are closely contacted to each other behind the transcribing step, and also the separating step is preferably carried out after the cooling step.

For instance, a method in which the heated sheet to be embossed or the like is left at the room temperature may be employed in this cooling step. In addition, a method in which the heated sheet is forcefully cooled from the outside with cooled air, cooled water, liquefied gas or the like in the state where the sheet is held and pressed by the cooling rolls may be employed. Further a method is allowable in which the embossing plate and the sheet to be embossed are held between and by, for instance, aluminum plates so that they are closely contacted to each other.

In this case, as the cooling step is provided and the sheet to be embossed can be cooled and solidified in the state where the sheet is closely contacted to the embossing plate, so that a micro embossed sheet having no distorted emboss pattern generated during the transcribing step can be obtained.

In this invention, the cooling step is preferably carried out in the state where the embossing plate is substantially flat.

In this case, the transcribed embossing pattern can be cooled and solidified in the cooling step for solidifying he embossing pattern, so that a fine embossing pattern can be formed.

In the present invention, the sheet to be embossed is preferably cooled in the cooling step to a temperature lower than the softening point.

In this case, as the sheet to be embossed is cooled in the cooling step to a temperature lower than the softening point, the sheet to be embossed can be solidified without fail.

### (Employment of an Endless Belt)

In the present invention, it is preferable to provide, between the transcribing step and the separating step, a transfer step in which the embossing plate and the sheet to be embossed are transferred after the transcription by an endless belt wound around at least either one of the two rolls forming a pair.

The endless belt is a belt having no end, and includes, for instance, one wound around two or more rolls.

Materials for the endless belt should preferably have the high heat resistance, high heat conductivity, and high durability. as for the form, the width and peripheral length may be selected according to the size of the embossing plate to be used. Further the thickness may be selected according to the required durability and heat conductivity. The thickness is generally in the range from 0.05 to 2.00 mm, and more preferably in the range from 0.30 to 0.70 mm.

With this configuration, movement of the embossing plate is carried out by the endless belt, the embossing plate can continuously be moved under stable conditions, so that embossing patterns can successively be transcribed under in the stable state.

In the present invention, the cooling step is preferably carried out with a cooling unit provided in the transfer section with the endless belt described above.

With this configuration, as the cooling unit is provided in the transfer section, the transfer step with the endless belt and the cooling step with cooling rolls can simultaneously be performed, so that micro embossed sheets can be manufactured without requiring an excessively complicated construction.

In the present invention, the cooling unit is preferably provided with a space from one of the two rolls forming a pair, and also preferably includes a cooling roll with the endless belt wound therearound.

With this configuration, as the cooling unit includes a cooling roll with the endless belt wound therearound and transfer and cooling can be carried out simultaneously, and therefore there is provided the advantage that the production line is not excessively long.

In the present invention, the cooling unit preferably has a second cooling roll provided between said either one of the rolls and the cooling roll.

The second cooling roll indicates a roll having the cooling function other than that of the cooling roll.

With this configuration, as the second cooling roll is provided, the second cooling roll functions as a support for the endless belt, and the embossing plate or others are fully cooled before they reach the cooling roll, which contributes to further cooling and solidification of the sheet to be embossed.

In the present invention, the cooling unit preferably has a cooling air blowing mechanism for blowing cooling air from the side of the sheet to be embossed.

There is not specific restriction over the cooling air blowing mechanism, and any one capable of blowing air may be employed. More specifically, an air blower or a mist blower may be used for this purpose.

With this configuration, there is provided the cooling air blowing mechanism and the sheet to be embossed can directly be cooled, so that the sheet to be embossed or others can fully be cooled before they reach the cooling rolls, and therefore the sheet to be embossed can cooled and solidified more quickly.

### (Configuration of the Endless Belt)

In the present invention, a material for the endless belt is preferably metal.

The material for the endless belt is required to have high heat resistance, high heat conductivity, and excellent durability, and when also the cost is taken into considerations, metal is preferable. More specifically, stainless steel, carbon steel, and titanium alloy are preferable.

With the configuration, as the material for the endless belt is metal and metal is excellent in heat resistance, heat conductivity, and durability, so that an endless belt having high heat resistance, high heat conductivity, and excellent durability can be provided.

In the present invention, the sheet to be embossed is fed to between a pair of rolls so that the sheet directly contacts the endless belt, and the contact face of the endless belt may be a mirror-finished one.

With the configuration, when the endless belt contacts a surface of the embossed sheet opposite to the embossed surface, as a surface of the endless belt is mirror-finished, so that mirror-like luster can be given to a surface of the sheet contacting the endless belt.

In the present invention, the sheet to be embossed is fed to between a pair of rolls so that the sheet directly contact the endless belt, and the contact surface may be a rough one.

With this configuration, as a surface of the endless belt is rough, when the embossing plate contacts the endless belt in the transcribing step, the friction is large, so that the embossing plate can be moved in the transfer step without fail.

In the present invention, the sheet to be embossed is feed to between a pair of rolls so that the sheet contacts the endless belt, and the contact face of the endless belt may be coated with a heat-resisting and strippable resin.

The heat-resisting and strippable resin indicates a resin which is resistive to hear and can easily be separated after the resin surface is contacted, for instance, to a sheet to be embossed. More specifically, polyimide can be enumerated.

With this configuration, as a surface of the endless belt is coated with the heat resisting and strippable resin, the adaptability to be separated is very high when a sheet to be embossed is contacted to the endless belt, so that the sheet to be embossed can easily be separated from the contact face with the endless belt.

### (Arrangement of the Endless Belt)

In the present invention, the endless belt is preferably wound around a heated roll.

As a heated roll, a heating roll, which is either one of a pair of rolls for holding and pressing described above may be used.

With this configuration, as the endless belt can transfer heat from the heating roll, so that a long zone for heating an embossing plate or a sheet to be embossed can be provided.

In the present invention, the embossing plate may be located at a position where it contacts the endless belt.

With the configuration, heat from the heating roll can be transferred by the endless belt, so that a long heating zone can be provided.

In the present invention, the embossing plate may be located at a position where it does not contact the endless belt.

With this configuration, the embossing plate does not contact the endless belt at any position, and the embossing plate is held and pressed by the rolls, so that air residing between the embossing plate and a sheet to be embossed can be discharged.

### (Sheet)

The embossed sheet according to the present invention is characterized in that the embossed sheet is obtained by means of the method of manufacturing an embossed sheet according to the present invention as described above.

With the present invention as described above, as the micro embossed sheet is obtained by the manufacturing method as described above, the micro embossed sheet having fine embossing patterns can be obtained.

### Brief Description of the Drawings

Fig. 1 is a view showing a manufacturing device according to a first embodiment of the present invention;
Fig. 2 is a view showing a manufacturing device according to a second embodiment of the present invention;
Fig. 3 is a view showing a manufacturing device according to a third embodiment of the present invention;
Fig. 4 is a view showing a manufacturing device according to a fourth embodiment of the present invention;
Fig. 5 is a view showing a manufacturing device according to a fifth embodiment of the present invention;
Fig. 6 is a view showing a manufacturing device according to a sixth embodiment of the present invention;
Fig. 7 is a view showing a manufacturing device according to a seventh embodiment of the present invention;
Fig. 8 is a view showing a manufacturing device according to an eighth embodiment of the present invention;
Fig. 9 is a view showing a manufacturing device according to a ninth embodiment of the present invention;
Fig. 10 is a view showing a manufacturing device according to a tenth embodiment of the present invention;
Fig. 11 is a view showing a manufacturing device according to an eleventh embodiment of the present invention;
Fig. 12 is a view showing a manufacturing device according to a twelfth embodiment of the present invention;

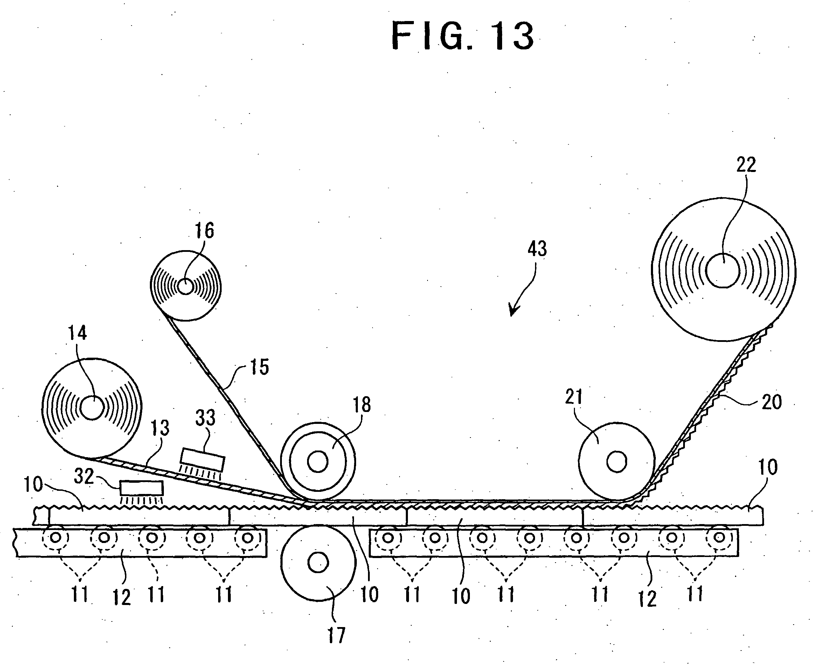

Fig. 13 is a view showing a manufacturing device according to a thirteenth embodiment of the present invention;
Fig. 14 is a cross-sectional view showing an embossing plate according to each of the embodiments above: and
Fig. 15 is a cross-sectional view showing an micro embossed sheet according to each of the embodiments above.

### Best mode for Carrying out the Invention

Embodiments of the present invention are described below with reference to the related drawings.

### [First Embodiment]

A manufacturing device 1 according to a first embodiment of the present invention is described below.

The manufacturing device 1 used in this manufacturing method comprises a working bench 12, a heating roll 17, a cooling roll 23, a roll 28 which are provided at vertexes of a substantial triangle, an endless belt wound around the three rolls 17, 23, 28, a feed roll 16, a pressing roll 18, an embossing plate 10, six second cooling rolls 33, four air blowers 25, a separating roll 21, and a wind-up roll 22.

A material for the embossing plate is electrocast nickel. A cube corner type of emboss pattern is formed on a surface of the embossing plate 10 contacting a sheet to which the emboss pattern is transcribed.

The working bench comprises a plurality of feed rollers 11, and the feed rollers 11 may be linked to a rotating/driving section such as a motor to feed the embossing plate 10 to each of the rolls 17, 18.

The sheet 13 to which the emboss pattern is transcribed is feed from the feed roll 14, and the sheet 13 to which the emboss pattern is transcribed a sheet made mainly from a thermoplastic resin. The material may be selected from, for instance, PE (polyethylene), PP (polypropylene), PC (polycarbonate), PVC (polyvinyl chloride), PMMA (polymethyl methacrylate), EMMA (ethylene-methyl methacrylate copolymer).

Further, the mirror-finished sheet 15 is fed from the feed roll 16, and the mirror-finished sheet 15 is a sheet having a mirror-finished surface. As the mirror-finished sheet 15, for instance, a film made from a resin such as PET (polyethylene telephthalate) and polyimide may be employed.

A material for a surface of the heating roll is a metallic one such as chromium. The heating roll may be heated, for instance, by providing a electric heater or an IH structure, or by flowing heated oil or the line inside the heating roll 17.

The pressing roll 18 is provided above the heating roll 17 with the endless belt 18 therebetween. As the pressing roll 18, a roll made from silicon rubber or Teflon (trademark) rubber having excellent heat resistance may be employed.

A rotating/driving section such as a motor is linked to at least one of the heating roll 17 and the pressing roll 18.

Further six second cooling rolls 33 for cooling the embossing plate 10 from inside of the endless belt 19 are provided between the heating roll 17 and the cooling roll 23. The cooling rolls 23, 33 can be cooled by cooling water circulating inside thereof and' having the temperature of 15 °C.

The endless belt 19 is made from metal, and in this embodiment, stainless steel is used. The surface is mirror-finished.

The embossing plate 10, the sheet 13 to which the emboss pattern is transcribed, and the mirror-finished sheet 15 each passing through between the heating roll 17 and the pressing roll 18 are provided between the pressing roll 18 and the separating roll 21, and are cooled by four air blowers 25 for cooling the embossing plate 10 from outside of the endless belt 19. Any type of blower capable of feeding air may be used as the air blower 25.

The separating roll 21 separates a completes micro embossed sheet 20 from the embossing plate 10, and is a roll made from silicon rubber.

As for the feed rolls 14, 16, the wind-up roll 22 for winding up the micro embossed sheet 20, and the roll 28, any type of roll made from any material may be employed on the condition that such objects as rotating the endless belt 19 or the like can be achieved.

The operating conditions of the machine assuming that the transcribing speed is in the range from 0.2 to 1.0 m per minute is as follows:
A linear pressure loaded to a section between the heating roll 17 and the pressing roll 18: 50 to 1000 N/cm (more preferably, 300 to 500 N/cm)
Transcribing zone: 1 cm or more (More specifically, 2 cm or more)

With the manufacturing device 1, the micro embossed sheet 20 is manufactured as described below.

At first, a temperature of the heating roll 17 is raised, and the pressing roll is rotated. Then the embossing plate 10, the sheet 13 to be embossed, and the mirror-finished sheet 15 are laminated in this order on the endless belt 19 placed on the feed roller 11 of the working bench 12 as well as on an extension line from the working bench 12, and are passed through between the heating roll 17 and the pressing roll 18. In this step, a plurality of embossing plates 10 are fed in succession. The embossing plate 10 is contacted to the sheet 13 to which the emboss pattern is transcribed with the surface having an emboss pattern thereon pressed to the sheet 13, and the mirror-finished sheet is contacted to the sheet 13 to which the emboss pattern is transcribed with the mirror-finished surface thereof contacted to the other surface of the sheet 13.

The embossing plate 10, the sheet 13 to which the emboss pattern is transcribed, and the mirror-finished sheet 15 having been passed through the heating roll 17 and the pressing roll 13 are fed to between the rolls 17, 18 being held and pressed in the horizontal direction, thus an emboss pattern on the embossing plate 10 being transcribed to the sheet 13 (transcribing step).

Then the embossing plate 10, the sheet 13 to be embossed, and the mirror-finished sheet 15 having been passed through between the heating roll 17 and the pressing roll 18 are transferred over the endless belt 19 (transfer step).

Further the embossing plate 10, the sheet 13 to be embossed, and the mirror-finished sheet 15 are cooled, in the state where they are held in the horizontal state, by the six units of second cooling rolls 33 from inside of the endless belt 19, and by the four units of air blowers 25 from the side of the mirror-finished sheet 15 (cooling step).

After the cooling step, with the separating rolls 21 provided opposing to each other with the endless belt 19 on the cooling roll 23, the micro embossed sheet 20 completed by transcribing an emboss pattern from the embossing plate 10 to the sheet 13 is separated. The separated micro embossed sheet20 is wound up by the wind-up roll 22 (separating step).

The cube corner type of emboss pattern is formed on a surface of the completed micro embossed sheet contacting the embossing plate 10.

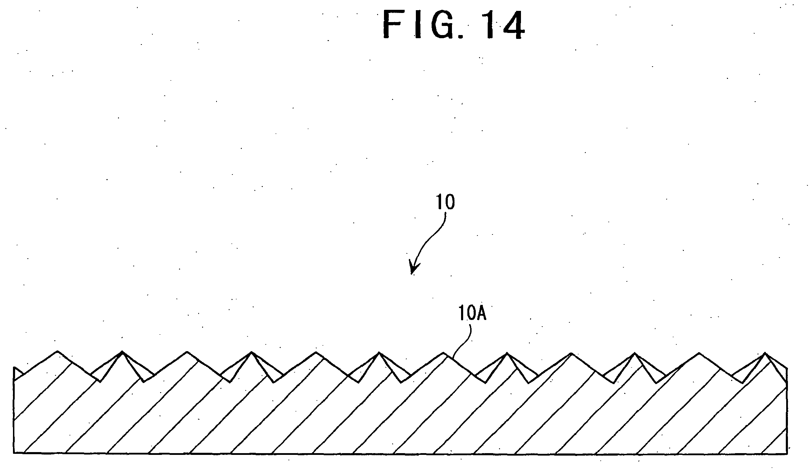

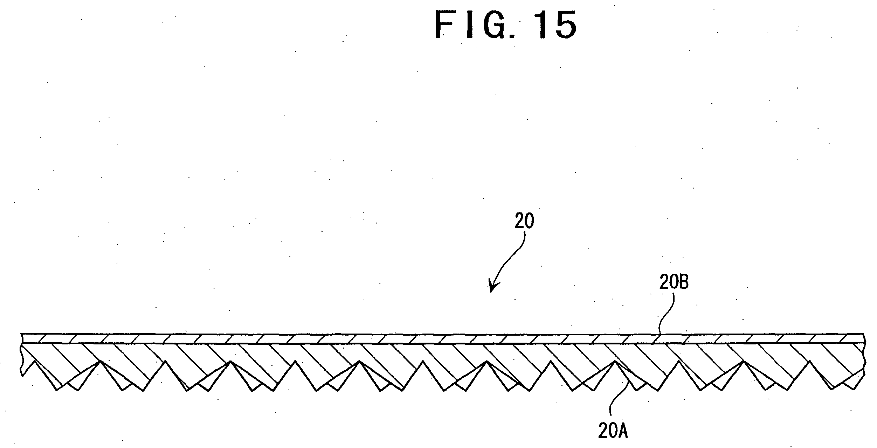

For instance, as shown in Fig. 14, a cube corner type of emboss pattern 10A is formed on a surface having an emboss pattern to be transcribed thereon of the embossing plate 10. With this feature, as shown in Fig. 15, the completed micro embossed sheet 20 has the cue corner type of emboss pattern 20A formed on the surface to which the emboss pattern is transcribed from the embossing plate and the mirror-finished surface 20B formed on the laminated surface.

The embossing plate 10 with the micro embossed sheet 20 having been separated therefrom is again fed to the feed side to be circulated for repetitive use.

With the embodiment as described above, the following effects are provided.
(1) The embossing plate 10 is transferred by using the endless belt 19, and the embossing plates can be moved continuously under the stable conditions, so that emboss patterns can continuously be transcribed in the stable state.
(2) By forming an emboss pattern on the embossing plate 10 which is a flat and rectangular plate, it is possible to manufacture emboss patterns on the plate with a machine having a relatively small size as compared to that the an embossing plate having a form of an endless pattern with the same width and area, so that the production cost can be reduced.
(3) By forming an endless belt having embossing patterns each having the width and same area with a plurality of embossing plates 10 each having a rectangular plate-like form as those in the present embodiment, it is possible to disperse risks generated when any of the emboss plates is damaged, and as a result, the production cost can be reduced.
(4) As the heating roll 17 and the pressing roll 18 are used for transcribing an emboss pattern and air between an emboss surface of the embossing plate and the sheet 13 to which the emboss is transcribed can be discharged, so that a fine emboss pattern can accurately be transcribed.
(5) The embossing plate and the sheet 13 to which the emboss pattern is transcribed above are held and pressed in the flat state, so that the emboss pattern can accurately be transcribed.
(6) Transcription of an emboss pattern is carried out in the flat state, and after the emboss pattern is transcribed, the transcribed emboss pattern is rapidly cooled by the cooling rolls 23, 33 as well as by the air blower 25 to solidify the emboss pattern, so that a fine emboss pattern can be formed.

### [Second Embodiment]

A second embodiment of the present invention is described below. In the following description, the same reference numerals are assigned to the same parts and components already described and detailed description thereof are omitted.

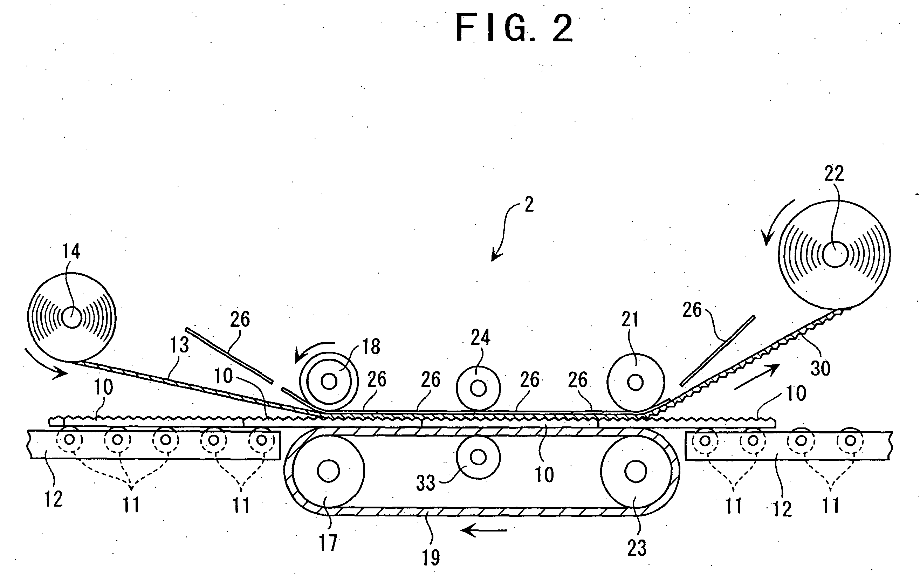

Fig. 2 shows a manufacturing device 2 according to a second embodiment according to the present invention.

The manufacturing device 2 used in the manufacturing method comprises a working bench 12, a heating roll 17, a cooling roll 23, an endless belt 19 wound around the two rolls 17, 23, a feed roll 14, a mirror-finished member 26, a pressing roll 18, a embossing plate 10, a cooling roll 24, a second cooling roll 33, a separating roll 21, and a wind-up roll 22.

The cooling roll 33 cools the embossing plate 10 from inside of the endless belt 19, while the second cooling roll 24 cools the sheet 13 to be embossed and the embossing plate 10 from outside of the endless belt 19, and each of the cooling rolls 33, 24 can be cooled by cooling water circulating inside thereof and having a temperature of 15 °C.

The mirror-finished member 26 is an aluminum plate with the surface mirror-finished.

With the manufacturing device 2, the micro embossed sheet 30 is manufactured as described below.

At first, a temperature of the heating roll 17 is raised, and the pressing roll 18 is rotated. Then the embossing plate 10, sheet 13 to be embossed, and mirror-finished member 26 are laminated in this order over the endless belt 19 placed on the feed roller 11 on the working bench 12 and on a extension line of the working bench 12, and the laminated embossing plate 10, sheet 13, and mirror-finished member 26 are passed through between the heating roll 17 and the pressing roll 18. In this step, the surface of the embossing plate 10 having an emboss pattern thereon contacts the sheet 13 to be embossed, and the mirror-finished surface of the mirror-finished member 26 contacts the sheet 13.

Further the embossing plate 10, the sheet 13 to be embossed, and the mirror-finished member 26 having been inserted between the heating roll 17 and the pressing roll 18 are fed to between the rolls 17, 18 to be held thereby in the horizontal state, and the emboss pattern on the embossing plate 10 is transcribed onto the sheet 18 (transcribing step).

Then the embossing plate 10, the sheet 13 to be embossed, and the mirror-finished member 26 having been inserted between the heating roll 17 and the pressing roll 18 are transferred over the endless belt 19 (transfer step).

Further the embossing plate 10, the sheet 13 to be embossed, and the mirror-finished member 26 are cooled and solidified by the second cooling roll 33 from inside of the endless belt 19 and also by the cooling roll 24 from the mirror-finished member 26 (cooling step).

After the cooling step, the completed micro embossed sheet 30 with the emboss pattern having been transcribed onto the sheet 13 is separated from the embossing plate 10 by the separating roll 21 provided on an end of the work bench 12. Further, also the mirror-finished member 26 is separated from the micro embossed sheet 30. The micro embossed sheet 30 is wound up by the wind-up roll 22 (separating step).
(7) As the mirror-finished member 26 is held and machined in the state where the mirror-finished member 26 is contacted to the sheet 13 to which an embossed sheet is transcribed, a mirror-like luster can be given to a surface of the sheet 13 in the opposite side form the embossed side.

### [Third Embodiment]

A third embodiment of the present invention is described below.

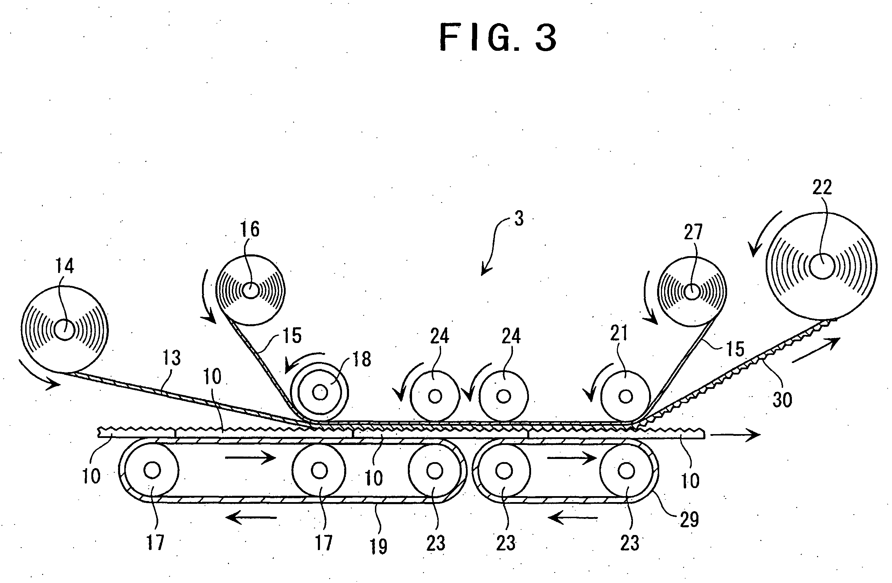

Fig. 3 shows a manufacturing device 3 according to a third embodiment of the present invention.

The manufacturing device 3 used in the manufacturing method comprises heating rolls 17, 17, a cooling roll 23, an endless belt 19, cooling belts 23, 23, an endless belt 29 wound around the two cooling roll 23, a feed roll 14, a feed roll 16, a pressing roll 18, an embossing plate 10, two cooling rolls 24, a separating roll 21, a wind-up roll 27, and a wind-up roll 22.

The endless belt 19 is wound around the three rolls 17, 17, 23 with the first heating roll 17 and the cooling roll 23 provided at the ends respectively, and the second heating roll 17 is provided at a substantially central position of the endless belt 19. The pressing roll 18 is provided above the second heating roll 17 with the endless belt 19 therebetween.

The endless belt 29 is wound around the two cooling roll 23. Further one of the cooling rolls 24 is provided above the cooling roll 23 with the endless belt therebetween. The other cooling roll 24 is provided above the cooling roll 23 with the endless belt therebetween. Further the separating roll 21 is provided above the other cooling roll 23 with the endless belt 29 therebetween.

The micro embossed sheet 30 is manufactured with the manufacturing device 3 as described below.

At first the heating rolls 17, 17 are heated and the pressing roll 18 is rotated. In this step, the embossing plate 10 is heated by the first heating roll 17 prior to the transcribing step (plate heating step).

Then the embossing plate 10, sheet 13 to be embossed, and mirror-finished sheet 15 are laminated in this order on the endless belt 19, and the laminated embossing plate 10, sheet 13 to be embossed, and mirror-finished sheet 15 are passed in the state through between the second heating roll 17 and the pressing roll 18. In this step, a surface of the embossing plate with an emboss pattern thereof contacts the sheet 13, and the mirror-finished surface of the mirror-finished sheet 15 is one in the opposite side from the surface contacting the sheet 13.

Further the embossing plating 10, sheet 13 to be embossed, and mirror-finished sheet 15 having been passed through the heating roll 17 and the pressing roll 18 are fed to between the rolls 17, 10 so that they are held and pressed in the horizontal direction, thus an emboss pattern on the embossing plate 10 being transcribed onto the sheet 13 (transcribing step).

The embossing plating 10, sheet 13 to be embossed, and mirror-finished sheet 15 having been passed through the heating roll 17 and the pressing roll 18 are transferred over the endless belt 19 (transfer step).

Further the embossing plating 10, sheet 13 to be embossed, and mirror-finished sheet 15 are cooled by the cooling rolls 23, 23 from inside of the endless belt 19 and by the cooling rolls 24, 24 from the side of the mirror-finished sheet 15 and is cooled and solidified in the flat state (cooling step).

After the cooling step, by the separating roll 21 provided at a position opposite to the cooling roll 23 with the endless belt 29 therebetween, the completed micro embossed sheet 30 completed by transcribing the emboss pattern from the embossing plate 10 onto the sheet 13 is separated from the embossing plate 10. The separated micro embossed sheet 30 is wound up by the wind-up roll 22 (separating step). The mirror-finished sheet 15 is recovered by the wind-up roll 27.

With the embodiment as described above, in addition to the effects provided in the first embodiment, the following effects are provided.
(8) As there is provided the plate heating step and also the embossing plate 10 is previously heated, the sheet 13 to which the embossed sheet 13 was transcribed is heated from both sides of the embossing plate 10 and the heating roll 17 to soften the sheet 13 before the transcribing step, so that transcription of an emboss pattern to the sheet 13 can efficiently be performed.

### [Variants]

The present invention is not limited to the embodiments described above, and modifications and improvements within the range in which the object of the present invention can be achieved are included within the scope of the present invention.

For instance, there may be provided an elastic member between the sheet 13 to which an embossed sheet 13 is transcribed and the pressing roll 18.

The endless belts 19, 19 each having a surface coated with a heat-resisting separable resin may be employed.

Further, although the heating roll 17 is used in the third embodiment, a method of heating, for instance, with a electric heater or the like may be employed.

Further a sheet heating step in which the sheet 13 is heated may be provided before the transcribing step.

In the following description, description of the embossing plate 10, sheet 13 to be embossed, mirror-finished sheet 15, feed rolls 14, 16, micro embossed sheet 20, separating roll 21, and wind-up roll 22 are omitted.

### [Fourth Embodiment]

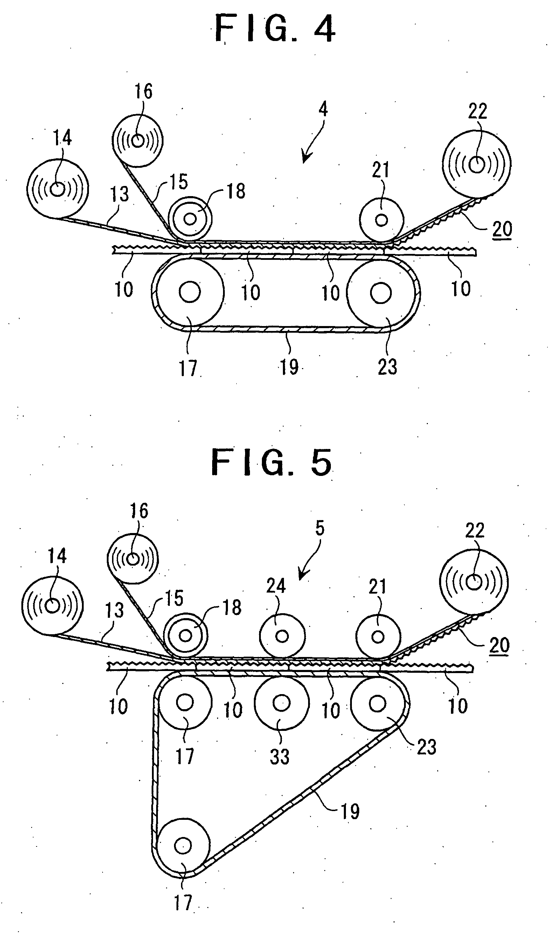

As shown in Fig. 4, the manufacturing device 4 comprises a heating roll 17, a cooling roll 23, an endless belt 19 wound around these rolls 17, 23, and a pressing roll 18 provided above the heating roll 17 with the endless belt 19 therebetween.

### [Fifth Embodiment]

As shown in Fig. 5, the manufacturing device 5 comprises heating rolls 17, 17, a cooling roll 23, a second cooling roll 33, an endless belt 19 wound around the rolls 17, 17, 23, 33 which are provided at vertexes and on one edge of a triangle, a pressing roll 18 provided above one of the heating rolls 17with the endless belt therebetween, and a cooling roll 24 provided at a position facing the second cooling roll 33 within the endless belt 19.

### [Sixth Embodiment]

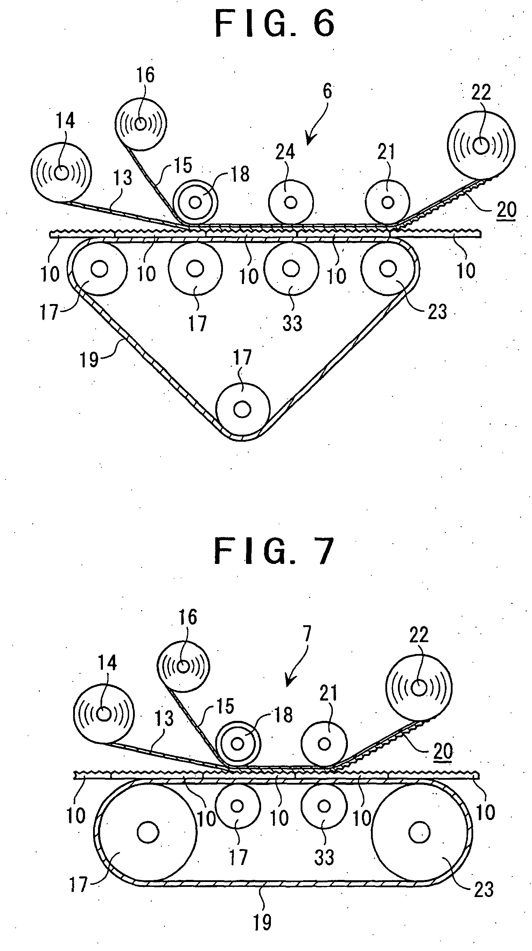

As shown in Fig. 6, the manufacturing device 6 comprises heating rolls 17, 17, 17, a cooling roll 23, a second cooling roll 33, an endless belt 19 wound around the rolls 17, 17, 17, 23, 33 (of these rolls, the two heating rolls 17, 17 and the cooling roll 23 are provided at vertexes of a triangle, and the remaining heating rolls 17 and the second cooling roll 33 are provided on one edge of the triangle), a pressing roll 18 provided above the heating roll 17 present on one edge of the triangle, and a cooling roll 24 provided at a position facing to the second cooling roll 33 present on one edge of the triangle within the endless belt 19.

### [Seventh Embodiment]

As shown in Fig. 7, the manufacturing device 7 comprises a heating roll 17, a cooling roll 23, an endless belt 19 wound around these rolls 17, 23, a small size heating roll 17 and a second cooling roll 33 provided within the endless belt 19, a pressing roll 18 provided above the small size heating roll 17 with the endless belt 19 therebetween, and a second cooling roll 33 provided under the separating roll 21.

### [Eighth Embodiment]

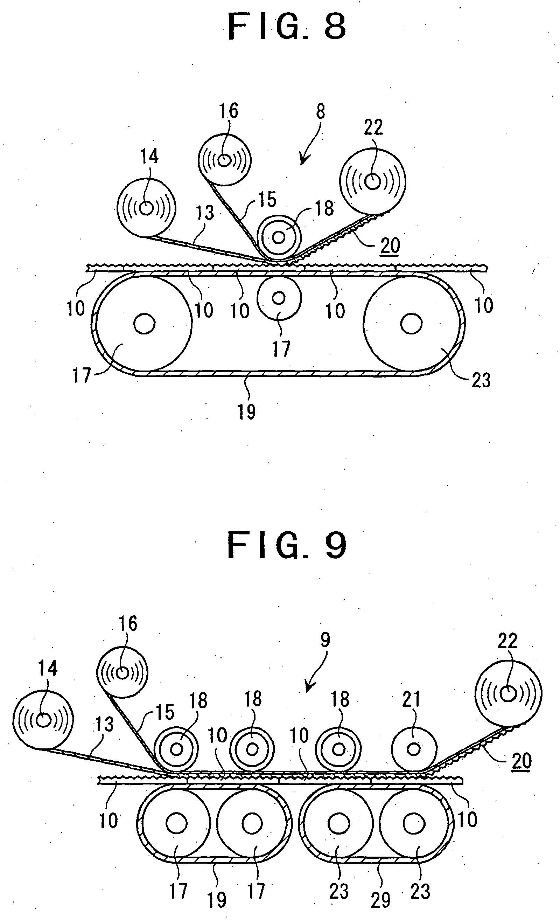

As shown in Fig. 8, the manufacturing device 8 comprises a heating roll 17, a cooling roll 23, an endless belt wound around these rolls 17, 23, a small size heating roll 17 provided within the endless belt 19, and a pressing roll 18 provided above the small size heating roll 17 with the endless belt therebetween.

### [Ninth Embodiment]

As shown in Fig. 9, the manufacturing device 9 comprises heating rolls 17, 17, an endless belt 19 wound around these rolls 17, 17, cooling rolls 23, 23, an endless belt 29 wound around the rolls 23, 23, pressing rolls provided above the heating rolls 17, 17 respectively with the endless belt therebetween, and a pressing roll 18 and a separating roll 21 provided above the cooling rolls 23, 23 with the endless belt therebetween.

### [Tenth Embodiment]

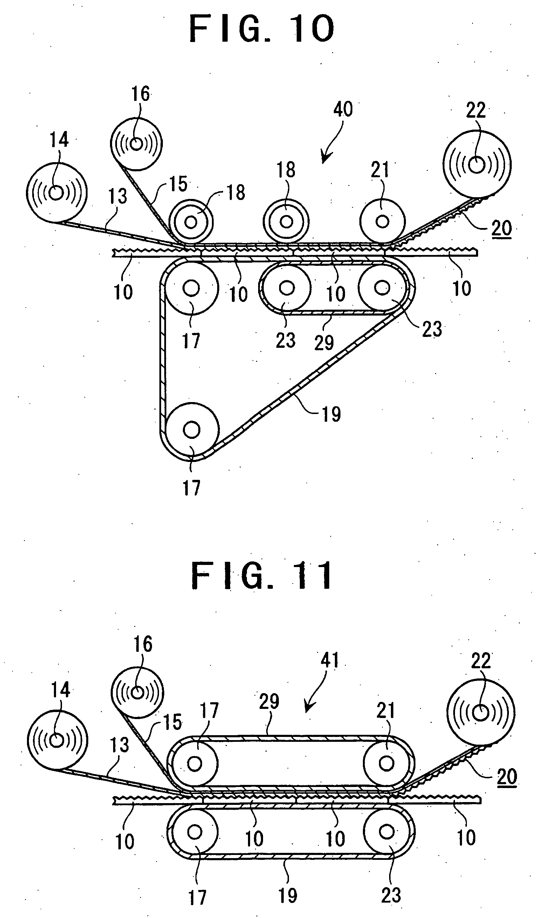

As shown in Fig. 10, the manufacturing device 40 comprises cooling rolls 23, 23, an endless belt 29 wound around these rolls 23, 23, heating rolls 17, 17, an endless belt 19 wound around the rolls 17, 17 and the endless belt 29, a pressing roll 18 provided above the heating roll 18 with the endless belt 19 therebetween, a pressing roll 18 provided above the cooling roll 23 with the endless belt 29, 19, and a separating roll 21 provided above the other cooling roll 23 with the endless belts 29, 19 there between.

### [Eleventh Embodiment]

As shown in Fig. 11, the manufacturing device 41 comprises a heating roll 17, a cooling roll 23, an endless belt wound around these rolls 17, 23, a heating roll 17, a separating roll 21, and endless belt 29 wound around these rolls 17, 21. The endless belts 19 and 29 are parallel to each other, and the heating roll 17 in the side of the endless belt 29 is provided above the heating roll 17 in the side of the endless belt 19, while the separating roll 21 in the side of the endless bet 29 is provided above the cooling roll 23 in the side of the endless belt 19.

### [Twelfth Embodiment]

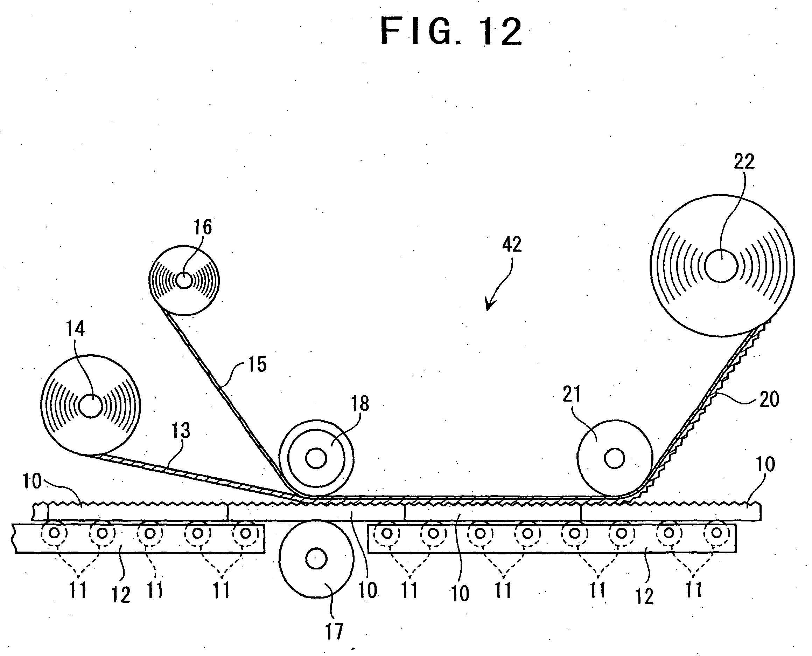

Fig. 12 shows a manufacturing device 42 according to a twelfth embodiment of the present invention.

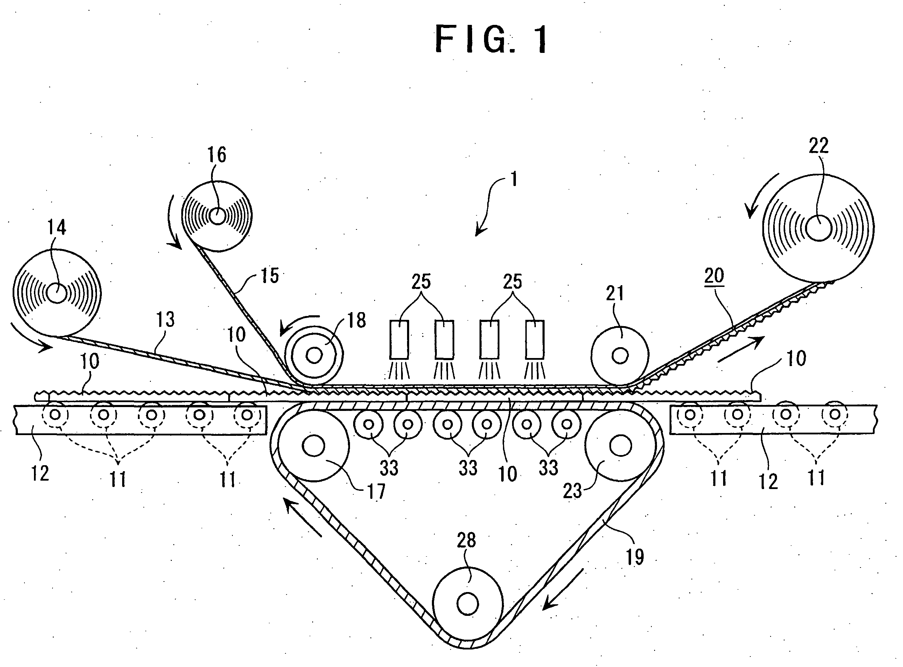

In each of the first to eleventh embodiments described above, a transfer step using the endless belt 19 is provided, and further a cooling step is provided in the transfer step. In the present invention, however, the configuration is allowable in which the endless belt 19 is not employed. In this case, the working bench 12 provided in the downstream side (in the right side in the figure) from the endless belt 19 in Fig. 1 is extended, and the embossing plate 10 is fed by a plurality of feed rollers 11. In this embodiment, the sheet 13 to be embossed may be cooled by atmospheric air, but also the configuration is allowable in which a cooling section such as the air blower 25 or the like may be provided in Fig. 1.

In this embodiment, the micro embossed sheet 20 is manufactured as described below.

At first, a temperature of the heating roller is raised, and the pressing roll 18 is rotated. Then the embossing plate 10, sheet 13 to be embossed, and mirror-finished sheet 15 are laminated in this order on the feed roller 11 of the working bench 12, and then the laminated embossing plate 10, sheet 13 to be embossed, and mirror-finished sheet 15 are passed through the heating roll 17 and the pressing roll 18. The surface of the embossing plate 10 with an emboss pattern formed thereon contacts the sheet 13 to be embossed, and the mirror-finished surface of the mirror-finished sheet 15 is a surface in the contrary side from the surface contacting the sheet 13.

Further the embossing plate 10, sheet 13 to be embossed, and mirror-finished sheet 15 having been passed through between the heating roll 17 and the pressing roll 18 are fed to between the rolls 17, 18 so that they are held thereby in the horizontal state, thus an emboss pattern of the embossing plate 10 being transcribed onto the sheet 13 (transcribing step).

Then the embossing plate 10, sheet 13 to be embossed, and mirror-finished sheet 15 are held between two sheets of aluminum plates (not shown) and are left for 20 seconds in the state, and are cooled and solidified in the flat state (cooling step).

After the cooling step, the micro embossed sheet 20 completed by transcribing the emboss pattern to the sheet 13 is separated from the embossing plate 10 by the separating roll 21 provided at an end of the working bench 12. The separated micro embossed sheet 20 is wound up by the wind-up roll 22 (separating step).

With the embodiment as described above, the endless belt 19 is not provided, so that the effects provided in the first embodiment can not be obtained, but the effects provided in the first embodiments (2) to (6) can be obtained.

### [Thirteenth Embodiment]

Fig, 13 shows a manufacturing device 43 according to a thirteenth embodiment of the present invention.

The manufacturing device 43 according to this embodiment is different from the manufacturing device 42 according to the twelfth embodiment in the points that an electric heater 32 for heating the embossing plate before it is sent to the heating roll 17 and an electric heater for heating the sheet 13 before it is sent to the heating roll 17 are provided.

Other conditions are the same as those in the twelfth embodiment.

In this embodiment, the micro embossed sheet 20 is manufactured as described below.

At first, temperatures of the electric heaters 32, 33 are raised to raise a temperature of the heating roll 17, and the pressing roll 18 is rotated. Then the embossing plate 10, sheet 13 to be embossed, and mirror-finished sheet 15 are laminated in this order on the feed roller 11 of the working bench 12, and the laminated embossing plate 10, sheet 13 to be embossed, and mirror-finished sheet 15 are passed through the heating roll 17 and the pressing roll 18. In this step, the surface of the embossing plate 10 with an emboss pattern formed thereon contacts the sheet 13, and the mirror-finished surface of the mirror-finished sheets is a surface in the contrary side from the surface contacting the sheet 13.

Further the embossed embossing plate 10, sheet 13 to be embossed, and mirror-finished sheet 15 are fed to between the rolls 17, 18 so that they are held thereby in the horizontal state, thus an emboss pattern of the embossing plate 10 being transcribed onto the sheet 13 (transcribing step).

Then the embossing plate 10, sheet 13 to be embossed, and mirror-finished sheet 15 are held between two sheet of aluminum plates (not shown), and are left for 20 seconds in the state, and are cooled and solidified in the flat state (cooling state).

After the cooling step, the micro embossed sheet 20 completed by transcribing the emboss pattern to the sheet 13 is separated from the embossing plate 10 by the separating roll 21 provided at an end of the working bench 12. The separated micro embossed sheet 20 is wound up by the wind-up roll 22 (separating step).

With the present embodiment, in addition to the effects in the twelfth embodiment, the following effects are provided.
(9) As an electric heater 33 for heating the sheet 13 to be embossed before it is fed to the heating roll 17 is provided, the sheet 13 is previously heated, and then the sheet 13 is further softened before an emboss pattern is transcribed thereto by heating the sheet 13 also with the heating roll 17, so that an emboss pattern can be transcribed onto the sheet 13 more efficiently.
(10) As the electric heater 32 for heating the embossing plate 10 before it is fed to the heating roll is provided and also the embossing plate 10 is previously heated, the sheet 13 can be softened before the transcribing step by heating it from both sides of the embossing plate 10 and the heating roll 17, so that an emboss pattern can be transcribed onto the sheet 13 efficiently.

### [Example 1]

In the first embodiment, the micro embosses sheet was manufactured under the specific conditions as described bellows. Conditions for each components were as described below.

### (Embossing plate 10)

- Material:: Electrocast nickel
- Dimensions:: 400 mm (width) x 200 mm (length in the transcribing direction) x 0.4 mm (thickness)
- Surface form:: Regular triangle with the bottom edge of 173 µm, height of patter: 70.6 µm

### (Heating roll 17)

- Dimensions:: Inner diameter: 256 mm, surface length: 700 mm
- Surface material:: Plated with hard chromium
- Heating mechanism:: 12 rod-like ceramic heaters provided inside the heating roll 17,
- maximum total output:: 6 Kw

### (Pressing roll 18)

- Dimensions:: Inner diameter: 140 mm, surface length: 600 mm
- Surface:: Made from silicon rubber with the hardness of 75 degrees

### (Sheet 13 to be embossed)

- Material:: EMMA (Ethylene-methyl methacrylate copolymer) produced by Okamoto (K.K), Product name: Emasoft, melting point: 89 °C
- Form:: Width: 440 mm, thickness: 0.20 mm, form like a continuous sheet
- Others:: Not colored (transparent)

### (Mirror-finished sheet 15)

- Material:: O-PET (Extended polyethylene telephthalate) produced by Tore (K. K), Product
- name:: Lumilar
- Form:: width: 440 mm, thickness: 0.38 mm, two-axial extended sheet

### (Endless belt 19)

- Material:: Stainless steel
- Form:: Width: 600 mm, circumference length: 2300 mm, thickness: 0.60 mm, surface
- roughness:: 0.4 µm (Ra)

### (Cooling roll 23, 33)

- Cooling zone:: About 60 composite material from the holding and pressing section (between the heating roll 17 and the pressing roll 18)
- Cooling mechanism:: Water circulated within the rolls 23, 33 at a temperature of 15 °C.

### (Air blower 25)

Provided outside the endless belt19, used for cooling the embossing plate 10 or the like with the cooling air (at the temperature of 18 °C)

### (Conditions for running the manufacturing device 1)

Temperature of the heating roll 17: 123 °C
Linear pressure loaded to between the heating roll 17 and pressing roll 18: 600 N/cm
Transcribing speed: 3.0 m/min
Cooling conditions: Temperature at the end of the cooling zone: 31 °C

### (Result in Experimental Example 1)

The micro embossed sheet 20 manufactured by transcribing an emboss pattern thereto with he embossing plate 10 has the retroreflectivity. As a method of assessing the retroreflectivity of the obtained micro embossed sheet 20, the retroreflection coefficient may be used. The retroreflection coefficient is measured by the method described in JIS Z28714-1995.

The retroreflection coefficient of the micro embossed sheet 20(measured at the measurement angle of 0.2 degrees and'the irradiation angle of 5 degrees) was measured at 21 points on the surface, and the average value was 288 [cd/lux/m²].

According to JIS Z8714-1995, the first grade retroreflection coefficient for non color (transparent, white) is 70 [cd/lux/m²], and the second grade retroreflection coefficient for non color (transparent, white) was 35 [cd/lux/m²].

Therefore, a result obtained in Example 1 satisfies the requirement, and it may be said that the manufacturing method according to the present invention insures the sufficient transcribing capability.

### [Example 2]

In the twelfth embodiment, the micro embossed sheet 20 was manufactured under the following specific conditions.

Materials and other conditions of the embossing plate 10 and other rolls are the same as those employed in Experimental Example 1. Conditions for running the manufacturing device 42 were as described below.

### (Conditions for running the manufacturing device 42)

Temperature of the heating roll 17: 137 °C
Linear pressure between the heating roll 17 and the pressing roll 18: 500 N/composite material
Linear speed: 0.6 m/min
Cooling conditions: After transcription, held by two sheets of aluminum plates each with the thickness of 20 mm and left in the state for 20 seconds, and then separated.
Temperature when separated was 25 °C.

### (Result in Experimental Example 2)

The obtained sheet was assessed in the same way as in Experimental Example 1.

The retroreflection coefficient of the micro embossed sheet 20(measured at the measurement angle of 0.2 degrees and the irradiation angle of 5 degrees) was measured at 21 points on the surface, and the average value was 251 [cd/lux/m²].

According to JIS Z8714-1995, the first grade retroreflection coefficient for non color (transparent, white) is 70 [cd/lux/m²], and the second grade retroreflection coefficient for non color (transparent, white) was 35 [cd/lux/m²].

Therefore, a result obtained in Example 1 satisfies the requirement, and it may be said that the manufacturing method according to the present invention insures the sufficient transcribing capability.

### Industrial Availability

The present invention can be used for manufacturing lens function sheets with a micro emboss pattern thereon such as a Fresnel lens sheet, a lenticular lens sheet, a prism lens sheet or the like, and also the micro embossed sheet manufactured by the manufacturing method according to the present invention can be used as a retroreflective sheet (plastic reflective sheet) with a micro prism formed thereon in the fields of reflective plates, fashion, and construction.

## Claims

1. A method of manufacturing a micro embossed sheet having a fine emboss pattern comprising:
a transcribing step of overlaying a sheet to be embossed on a surface of a sheet-fed embossing plate with an emboss pattern formed thereon, holding and pressing said embossing plate and said sheet to be embossed with a pair of rolls provided on top and rear surfaces of said embossing plates to transcribe the emboss pattern onto said sheet; and
a separating step of separating said sheet from the embossing plate after the transcribing step.

2. The method of manufacturing a micro embossed sheet according to claim 1, wherein said emboss plates is continuously fed to a section between said pair of rolls.

3. The method of manufacturing a micro embossed sheet according to claim 1 or claim 2, wherein said transcribing step is carried out in the state where said embossing plate and said sheet are held and pressed in the substantially flat state.

4. The method of manufacturing a micro embossed sheet according to any of claims 1 to 3, wherein said embossing plate is a metallic one.

5. The method of manufacturing a micro embossed sheet according to any of claims 1 to 4, wherein said embossing plate has a concave cube comer type of emboss pattern.

6. The method of manufacturing a micro embossed sheet according to any of claims 1 to 5, wherein said sheet to which an embossed sheet is transcribed is made from a thermoplastic resin.

7. The method of manufacturing a micro embossed sheet according to any of claims 1 to 6, wherein said sheet is a continuous and lengthy one.

8. The method of manufacturing a micro embossed sheet according to any of claims 1 to 7, wherein said transcribing step carried out in the state where a mirror-finished member having a mirror-finished surface, said mirror-finished surface contacted to said sheet to be embossed, is overlaid on said sheet, and the overlaid mirror-finished member and said sheet are held and pressed.

9. The method of manufacturing a micro embossed sheet according to any of claims 1 to 8, wherein said transcribing step is carried out in the state the mirror-finished member having a mirror-finished surface is overlaid on the sheet to be embossed.

10. The method of manufacturing a micro embossed sheet according to any of claims 1 to 9, wherein a surface of at least one of said pair of rolls is formed with an elastic body.

11. The method of manufacturing a micro embossed sheet according to any of claims 1 to 10, wherein said transcribing step is carried out in the state where an elastic member is provided between said sheet and said roll and is held and pressed by said sheet and said roll.

12. The method of manufacturing a micro embossed sheet according to any of claims 1 to 11, wherein a linear pressure for holding and pressing the embossing plate and the sheet in said transcribing step is 50 N/composite material or more.

13. The method of manufacturing a micro embossed sheet according to any of claims 1 to 12, wherein said transcribing step is carried out in the state where said sheet to be embossed is heated to the melting point or more while the embossing plate and the sheet are held and pressed.

14. The method of manufacturing a micro embossed sheet according to any of claims 1 to 13, wherein at least one of said pair of rolls used in said transcribing step is a heating roll.

15. The method of manufacturing a micro embossed sheet according to claim 14, wherein said heating roll is provided in the side of said embossing plate.

16. The method of manufacturing a micro embossed sheet according to claim 15, wherein said heating roll is contacted to a rear surface of said embossing plate.

17. The method of manufacturing a micro embossed sheet according to any of claims 1 to 16, wherein a plate heating step for heating the embossing plate previously is provided before said transcribing step.

18. The method of manufacturing a micro embossed sheet according to any of claims 1 to 17, wherein a sheet heating step for previously heating the sheet to be embossed is provided before said transcribing step.

19. The method of manufacturing a micro embossed sheet according to any of claims 1 to 18, wherein a cooling step for cooling and solidifying said embossing plate and said sheet in the state where they are closely contacted to each other is provided between said transcribing step and said separating step.

20. The method of manufacturing a micro embossed sheet according to claim 19, wherein said cooling step is carried out for cooling and solidifying in the state where said embossing plate is in the substantially flat state.

21. The method of manufacturing a micro embossed sheet according to claim 19 or claim 20, wherein said sheet is cooled to the melting point or below in said cooling step.

22. The method of manufacturing a micro embossed sheet according to claims 1 to 18, wherein a transfer step of transferring said embossing plate and said sheet after the transcribing step with an endless belt wound around at least one of said pair of rolls is provided between said transcribing step and said separating step.

23. The method of manufacturing a micro embossed sheet according to any of claims 19 to 21 further comprising:
a transfer step of transferring said embossing plate and said sheet after the transcribing step with an endless belt wound around at least one of said pair of rolls, said step provided between said transcribing step and said separating step, wherein said cooling step is carried out by a cooling section during the transfer step by said endless belt.

24. The method of manufacturing a micro embossed sheet according to claim 23, wherein said cooling section is provided with a space from one of said pair of rolls, and includes a cooling roll with said endless belt wound therearound.

25. The method of manufacturing a micro embossed sheet according to claim 24, wherein said cooling section further comprises a second cooling roll provided between said one roll and said cooling roll.

26. The method of manufacturing a micro embossed sheet according to any of claims 23 to 25, wherein said cooling section comprises a cooling area blowing mechanism for blowing cooling air from the side of said sheet to be embossed.

27. The method of manufacturing a micro embossed sheet according to any of claims 22 to 26, wherein material of said endless belt is metal.

28. The method of manufacturing a micro embossed sheet according to any of claims 22 to 27, wherein said sheet is fed to between a pair of rolls so that said sheet contacts said endless belt, and a surface of the endless belt contacting said endless belt is mirror-finished.

29. The method of manufacturing a micro embossed sheet according to any of claims 22 to 27, wherein said sheet is fed to between a pair of rolls so that said sheet contact said endless belt, and the contacting surface is a rough one.

30. The method of manufacturing a micro embossed sheet according to any of claims 22 to 29, wherein said sheet is fed to between a pair of rolls so that said sheet contact said endless belt, and a surface of said endless belt contacting said sheet is coated with a heat-resistant separable resin.

31. The method of manufacturing a micro embossed sheet according to any of claims 22 to 30, wherein said endless belt is wound around a heated roll.

32. The method of manufacturing a micro embossed sheet according to any of claims 22 to 31, wherein said embossing plate is provided at a position where said embossing plate contacts said endless belt.

33. The method of manufacturing a micro embossed sheet according to any of claims 22 to 31, wherein said embossing plate is provided at a position where said embossing plate does not contact said endless belt.

34. An embossed sheet manufactured by the manufacturing method according to any of claims 1 to 33.
